# EUROPEAN PATENT APPLICATION

(11) **EP 4 801 100 A1**
(43) Date of publication of application: **02.09.2026**
(21) Application number: 24881343.8
(22) Date of filing: 24.09.2024
(51) Int. Cl.: H04W 28/02, H04W 76/10

(54) **RADIO ACCESS NETWORK ARCHITECTURE-BASED COMMUNICATION METHOD, APPARATUS, AND READABLE STORAGE MEDIUM**

(30) Priority: 27.10.2023 CN 202311404849
(71) Applicant: Datang Mobile Communications Equipment Co., Ltd., Beijing 100085 (CN)
(72) Inventor: GU, Xiaofei, Beijing 100085 (CN); ZHANG, Dajun, Beijing 100085 (CN); CAI, Yu, Beijing 100085 (CN)
(74) Representative: Studio Torta S.p.A.
(86) International application number: PCT/CN2024/120695
(87) International publication number: WO 2025/086977

(57) **Abstract**

Disclosed in the present disclosure are a radio access network (RAN) architecture-based communication method, an apparatus, and a processor-readable storage medium. The method comprises: receiving an establishment signaling transmission request of a user equipment (UE) by means of a third network function; on the basis of the establishment signaling transmission request, establishing, with the third network function, a first UE signaling context; and sending a signaling transmission instruction to a second network function, the signaling transmission instruction being used for instructing the second network function to establish signaling interaction with the third network function, and the second network function being a network function independent of a first network function in an RAN control plane. The present disclosure is used for solving the technical problem in the prior art that an RAN can only deploy a gNB-CU-CP which comprises the function of supporting UE radio connection management and also comprises the function of supporting UE user plane data transmission management, resulting in high costs.

## Description

The application claims the priority of Chinese patent application No. 202311404849.0, filed on October 27, 2023, titled "Radio Access Network Architecture-Based Communication Method, Apparatus, and Readable Storage Medium", the entire content of which is incorporated herein by reference.

### TECHNICAL FIELD

The disclosure relates to a field of communication technologies, in particular to a radio access network (RAN) architecture-based communication method, an RAN architecture-based communication apparatus and a readable storage medium.

### BACKGROUND

The existing next generation (NG)-RAN/5^{th} generation (5G) mobile communication system (5G) RAN carries all control plane functions on a single logical node, i.e., NG node B (gNB)-centralized unit (CU)-control plane (CP), which results in high complexity of the gNB-CU-CP and high coupling between these functions Thus, services of base stations are developed slowly. In addition, the gNB-CU-CP supports functions such as wireless connection management, radio bearer management and wireless network opening. Although these functions are relatively independent, updating any one of them requires updating the entire gNB-CU-CP, which leads to complex service updates and a long development cycle.

For future 6th generation (6G) mobile communication system distributed network scenarios, different distributed node functions may lead to different requirements for RAN wireless functions, and RAN will no longer be required to support complete wireless network functions. For example, in an integrated sensing and communication (ISAC) scenario, there may be situations where there is no need to enable a user equipment (UE) user plane data transmission management network function, but it is necessary to support a UE wireless connection management function. In some positioning scenarios, there may be situations where there is no need to enable the UE user plane data transmission management network function, but only a wireless connection function is required. In these scenarios, existing RAN technologies can only deploy the gNB-CU-CP, which has both the UE wireless connection management function and the UE user plane data transmission management function, resulting in high costs.

### SUMMARY

The embodiments of the disclosure provide an RAN architecture-based communication method, an RAN architecture-based communication apparatus and a readable storage medium, to solve a technical problem of high costs due to the application of a gNB-CU-CP, which supports both a UE wireless connection management function and a UE user plane data transmission management function, in existing RAN technologies.

In a first aspect, the embodiments of the disclosure provide an RAN architecture-based communication method. The method is applied to a first network function on an RAN CP, and includes:
receiving a setup signaling transmission request from a UE through a third network function;
generating a first UE signaling context with the third network function according to the setup signaling transmission request; and
sending a signaling transmission indication to a second network function;
in which the signaling transmission indication is used to enable signaling interactions between the second network function and the third network function, and the second network function is a network function on the RAN CP that is independent of the first network function.

Optionally, the first network function interacts with the second network function through service-oriented interfaces or point-to-point interfaces; and/or
the first network function interacts with the third network function through service-oriented interfaces or point-to-point interfaces; and/or
the second network function interacts with the third network function through service-oriented interfaces or point-to-point interfaces.

Optionally, generating the first UE signaling context with the third network function according to the setup signaling transmission request, includes:
requesting the third network function to generate the first UE signaling context, in which the first UE signaling context includes a second network function identifier (ID) or a second network function address, and the signaling transmission indication sent to the second network function includes a third network function ID or a third network function address.

Optionally, generating the first UE signaling context with the third network function according to the setup signaling transmission request, includes: requesting the third network function to generate the first UE signaling context, in which the first UE signaling context includes one of a second network function ID and a second network function address and one of a fourth network function ID and a fourth network function address, the signaling transmission indication is further used to enable signaling interactions between the second network function and a fourth network function, and the fourth network function is a network function on the RAN CP that is independent of the second network function.

Optionally, the method further includes: generating a second UE signaling context with a fifth network function according to the setup signaling transmission request, in which the fifth network function is a functional network element in a core network, and the second UE signaling context includes interaction signaling between an RAN and the core network.

Optionally, the first network function interacts with the fifth network function through service-oriented interfaces or point-to-point interfaces.

Optionally, the method further includes: receiving response information from the fifth network function in a case that the second UE signaling context is generated with the fifth network function.

Optionally, the method further includes: receiving response information from the UE through the third network function in a case that the first UE signaling context is generated with the third network function.

Optionally, the method further includes: in response to receiving a UE signaling modifying/releasing/deleting request, modifying, releasing or deleting the first UE signaling context and the second UE signaling context.

Optionally, the method further includes: receiving response information from the fifth network function in a case that the second UE signaling context is modified, released or deleted.

In a second aspect, the embodiments of the disclosure provide another RAN architecture-based communication method. The method is applied to a second network function on an RAN CP, and includes:
receiving a signaling transmission indication sent by a first network function; and
establishing signaling interactions with a third network function indicated in the signaling transmission indication according to the signaling transmission indication;
in which the first network function is a network function on the RAN CP that is independent of the second network function.

Optionally, the first network function interacts with the second network function through service-oriented interfaces or point-to-point interfaces; and/or
the second network function interacts with the third network function through service-oriented interfaces or point-to-point interfaces.

Optionally, the signaling transmission indication includes a third network function ID or a third network function address, and establishing the signaling interactions with the third network function indicated in the signaling transmission indication, includes: storing and using the third network function ID or the third network function address; and establishing the signaling interactions with the third network function.

Optionally, the method further includes: generating a data transmission bearer with the third network function in a case that the third network function ID or the third network function address is stored and used.

Optionally, the signaling transmission indication includes one of a third network function ID and a third network function address and one of a fourth network function ID and a fourth network function address, and establishing the signaling interactions with the third network function indicated in the signaling transmission indication, includes: storing and using one of the third network function ID and the third network function address and one of the fourth network function ID and the fourth network function address; and establishing the signaling interactions with the third network function and signaling interactions with a fourth network function.

Optionally, the method further includes: sending the third network function ID or the third network function address to the fourth network function, in which the third network function ID or the third network function address sent to the fourth network function is used for generating a data transmission bearer between the fourth network function and the third network function.

Optionally, the second network function interacts with the fourth network function through service-oriented interfaces or point-to-point interfaces; and/or
the third network function interacts with the fourth network function through service-oriented interfaces or point-to-point interfaces.

In a third aspect, the embodiments of the disclosure provide yet another RAN architecture-based communication method. The method is applied to a UE, and includes:
sending a setup signaling transmission request to a first network function on an RAN CP through a third network function, in which the setup signaling transmission request is used to instruct the first network function to generate a first UE signaling context with the third network function;
establishing signaling interactions with a second network function through the third network function in a case that the first network function has generated the first UE signaling context with the third network function according to the setup signaling transmission request, in which the first network function and the second network function are network functions on the RAN CP that are independent of each other.

Optionally, establishing the signaling interactions with the second network function through the third network function, includes: establishing the signaling interactions with the second network function through the third network function according to a third network function ID or a third network function address, in which the third network function ID or the third network function address is sent to the second network function by the first network function for the second network function to store and use.

Optionally, the method further includes: generating a data transmission bearer with the second network function through the third network function in a case that the second network function has stored and used the third network function ID or the third network function address.

Optionally, the method further includes: generating a data transmission bearer with a fourth network function through the third network function in a case that the second network function has sent the third network function ID or the third network function address to the fourth network function, and the fourth network function has stored and used the third network function ID or the third network function address.

Optionally, the method further includes: sending response information to the first network function in a case that the first UE signaling context is generated with the first network function.

In a fourth aspect, the embodiments of the disclosure provide an RAN architecture-based communication apparatus. The apparatus is applied to a first network function of an RAN CP at a base station side, and includes a memory, a transceiver and a processor.

The memory is configured to store computer programs, the transceiver is configured to transmit and receive data under the control of the processor, and the processor is configured to read the computer programs in the memory and perform the following operations:
receiving a setup signaling transmission request from a UE through a third network function;
generating a first UE signaling context with the third network function according to the setup signaling transmission request; and
sending a signaling transmission indication to a second network function;
in which the signaling transmission indication is used to establish signaling interactions between the second network function and the third network function, and the second network function is a network function on the RAN CP that is independent of the first network function.

Optionally, the first network function interacts with the second network function through service-oriented interfaces or point-to-point interfaces; and/or
the first network function interacts with the third network function through service-oriented interfaces or point-to-point interfaces; and/or
the second network function interacts with the third network function through service-oriented interfaces or point-to-point interfaces.

Optionally, the processor is further configured to: request the third network function to generate the first UE signaling context, in which the first UE signaling context includes a second network function ID or a second network function address, and the signaling transmission indication sent to the second network function includes a third network function ID or a third network function address.

Optionally, the processor is further configured to: request the third network function to generate the first UE signaling context, in which the first UE signaling context includes one of a second network function ID and a second network function address and one of a fourth network function ID and a fourth network function address, and the signaling transmission indication is further used to establish signaling interactions between the second network function and a fourth network function.

Optionally, the processor is further configured to: generate a second UE signaling context with a fifth network function according to the setup signaling transmission request, in which the fifth network function is a functional network element in a core network, and the second UE signaling context includes interaction signaling between an RAN and the core network.

Optionally, the first network function interacts with the fifth network function through service-oriented interfaces or point-to-point interfaces.

Optionally, the processor is further configured to: receive response information from the fifth network function in a case that the second UE signaling context is generated with the fifth network function.

Optionally, the processor is further configured to: receive response information from the UE through the third network function in a case that the first UE signaling context is generated with the third network function.

Optionally, the processor is further configured to: in response to receiving a UE signaling modifying/releasing/deleting request, modify, release or delete the first UE signaling context and the second UE signaling context.

Optionally, the processor is further configured to: receive response information from the fifth network function in a case that the second UE signaling context is modified, released or deleted.

In a fifth aspect, the embodiments of the disclosure provide another RAN architecture-based communication apparatus. The apparatus is applied to a second network function of an RAN CP at a base station side, and includes a memory, a transceiver and a processor.

The memory is configured to store computer programs, the transceiver is configured to transmit and receive data under the control of the processor, and the processor is configured to read the computer programs in the memory and perform the following operations:
receiving a signaling transmission indication sent by a first network function; and
establishing signaling interactions with a third network function indicated in the signaling transmission indication according to the signaling transmission indication;
in which the first network function is a network function on the RAN CP that is independent of the second network function.

Optionally, the first network function interacts with the second network function through service-oriented interfaces or point-to-point interfaces; and/or
the second network function interacts with the third network function through service-oriented interfaces or point-to-point interfaces.

Optionally, the signaling transmission indication includes a third network function ID or a third network function address, and the processor is further configured to: store and use the third network function ID or the third network function address, and establish the signaling interactions between the second network function and the third network function.

Optionally, the processor is further configured to: generate a data transmission bearer with the third network function in a case that the third network function ID or the third network function address is stored and used.

Optionally, the signaling transmission indication includes one of a third network function ID and a third network function address and one of a fourth network function ID and a fourth network function address, and the processor is further configured to: store and use one of the third network function ID and the third network function address and one of the fourth network function ID and the fourth network function address; and establish the signaling interactions with the third network function and signaling interactions with a fourth network function.

Optionally, the processor is further configured to: send the third network function ID or the third network function address to the fourth network function, in which the third network function ID or the third network function address sent to the fourth network function is used for generating a data transmission bearer between the fourth network function and the third network function.

Optionally, the second network function interacts with the fourth network function through service-oriented interfaces or point-to-point interfaces; and/or
the third network function interacts with the fourth network function through service-oriented interfaces or point-to-point interfaces.

In a sixth aspect, the embodiments of the disclosure provide yet another RAN architecture-based communication apparatus. The apparatus is applied to a UE, and includes a memory, a transceiver and a processor.

The memory is configured to store computer programs, the transceiver is configured to transmit and receive data under the control of the processor, and the processor is configured to read the computer programs in the memory and perform the following operations:
sending a setup signaling transmission request to a first network function on an RAN CP through a third network function, in which the setup signaling transmission request is used to instruct the first network function to generate a first UE signaling context with the third network function;
establishing signaling interactions with a second network function through the third network function in a case that the first network function has generated the first UE signaling context with the third network function according to the setup signaling transmission request, in which the first network function and the second network function are network functions on the RAN CP that are independent of each other.

Optionally, the processor is further configured to: establish the signaling interactions with the second network function through the third network function according to a third network function ID or a third network function address, in which the third network function ID or the third network function address is sent to the second network function by the first network function for the second network function to store and use.

Optionally, the processor is further configured to: generate a data transmission bearer with the second network function through the third network function in a case that the second network function has stored and used the third network function ID or the third network function address.

Optionally, the processor is further configured to: generate a data transmission bearer with a fourth network function through the third network function in a case that the second network function has sent the third network function ID or the third network function address to the fourth network function, and the fourth network function has stored and used the third network function ID or the third network function address.

Optionally, the processor is further configured to: send response information to the first network function in a case that the first UE signaling context is generated with the first network function.

In a seventh aspect, the embodiments of the disclosure provide an RAN architecture-based communication device. The device is applied to a first network function on an RAN CP, and includes:
a receiving module, configured to receive a setup signaling transmission request from a UE through a third network function;
a signaling generating module, configured to generate a first UE signaling context with the third network function according to the setup signaling transmission request; and
a sending module, configured to send a signaling transmission indication to a second network function;
in which the signaling transmission indication is used to establish signaling interactions between the second network function and the third network function, and the second network function is a network function on the RAN CP that is independent of the first network function.

In an eighth aspect, the embodiments of the disclosure provide another RAN architecture-based communication device. The device is applied to a second network function on an RAN CP, and includes:
a receiving module, configured to receive a signaling transmission indication sent by a first network function; and
a signaling interaction module, configured to establish signaling interactions with a third network function indicated in the signaling transmission indication according to the signaling transmission indication;
in which the first network function is a network function on the RAN CP that is independent of the second network function.

In a ninth aspect, the embodiments of the disclosure provide yet another RAN architecture-based communication device. The device is applied to a UE, and includes:
a sending module, configured to send a setup signaling transmission request to a first network function on an RAN CP through a third network function, in which the setup signaling transmission request is used to instruct the first network function to generate a first UE signaling context with the third network function; and
a signaling interaction module, configured to establish signaling interactions with a second network function through the third network function in a case that the first network function has generated the first UE signaling context with the third network function according to the setup signaling transmission request, in which the first network function and the second network function are network functions on the RAN CP that are independent of each other.

In a tenth aspect, the embodiments of the disclosure provide a processor-readable storage medium. The processor-readable storage medium stores programs that are used to cause a processor to implement the RAN architecture-based communication method described above.

According to the RAN architecture-based communication method, the RAN architecture-based communication apparatus and the readable storage medium provided by the embodiments of the disclosure, the RAN CP includes the first network function and the second network function that are independent of each other. Compared with the existing gNB-CU-CP that supports all the functions of the RAN CP, development complexity of the first network function and the second network function is reduced, and independent development of each network function accelerates the development of services of base stations. For example, the second network function will not be affected when updating the first network function, which makes it easy to update network characteristics.

In addition, in the RAN architecture-based communication method provided by the embodiments of the disclosure, because different network functions are set independently of each other, some required network functions are enabled selectively according to the requirements of application scenarios, thereby reducing costs.

### BRIEF DESCRIPTION OF THE DRAWINGS

The accompanying drawings, which are incorporated in and constitute a part of the specification, illustrate the embodiments consistent with the disclosure and together with the specification, serve to explain the principles of the disclosure.
FIG. 1 is a flowchart 1 of an RAN architecture-based communication method provided by the embodiments of the disclosure.
FIG. 2a is a schematic diagram of a type-1 RAN architecture according to Embodiment 1 of the disclosure.
FIG. 2b is a schematic diagram of a type-2 RAN architecture according to Embodiment 1 of the disclosure.
FIG. 2c is a schematic diagram of a type-3 RAN architecture according to Embodiment 1 of the disclosure.
FIG. 3a is a schematic diagram of a type-1 RAN architecture according to Embodiment 2 of the disclosure.
FIG. 3b is a schematic diagram of a type-2 RAN architecture according to Embodiment 2 of the disclosure.
FIG. 3c is a schematic diagram of a type-3 RAN architecture according to Embodiment 2 of the disclosure.
FIG. 4 is a flowchart 2 of an RAN architecture-based communication method provided by the embodiments of the disclosure.
FIG. 5 is a 6G distributed network architecture of the embodiments of the disclosure.
FIG. 6 is a flowchart 3 of an RAN architecture-based communication method provided by the embodiments of the disclosure.
FIG. 7 is a schematic diagram 1 of an RAN architecture-based communication apparatus provided by the embodiments of the disclosure.
FIG. 8 is a schematic diagram 2 of an RAN architecture-based communication apparatus provided by the embodiments of the disclosure.
FIG. 9 is a schematic diagram 3 of an RAN architecture-based communication apparatus provided by the embodiments of the disclosure.
FIG. 10 is a structural diagram 4 of an RAN architecture-based communication device provided by the embodiments of the disclosure.
FIG. 11 is a structural diagram 5 of an RAN architecture-based communication device provided by the embodiments of the disclosure.
FIG. 12 is a structural diagram 6 of an RAN architecture-based communication device provided by the embodiments of the disclosure.

Through the above drawings, the embodiments of the disclosure are illustrated clearly and will be further explained in detail in the following. These drawings and descriptions are not intended to limit the scope of the disclosed concepts in any way, but to explain the disclosed concepts to those skilled in the art by referring to specific embodiments.

### DETAILED DESCRIPTION

In the embodiments of the disclosure, "and/or" is used to describe relationships between associated objects, and it indicates three types of relationships. For example, "A and/or B" represents the following three relationships: A exists alone, A and B both exist, and B exists alone. The character "/" indicates that associated objects before and after the character "/" is in an "or" relationship.

In the embodiments of the disclosure, "a plurality of" refers to two or more, which is similar for other quantifiers.

The technical solutions of the embodiments of the disclosure will be described clearly and completely with reference to the accompanying drawings. Apparently, the embodiments described below are only part of the embodiments of the disclosure, not all of them. Based on the embodiments of the disclosure, other embodiments obtained by those skilled in the art without inventive works all fall into the scope of the disclosure.

The embodiments of the disclosure provide an RAN architecture-based communication method, an RAN architecture-based communication apparatus and a readable storage medium, to solve a technical problem of high costs due to the application of a gNB-CU-CP, which supports both a UE wireless connection management function and a UE user plane data transmission management function, in existing RAN technologies.

In addition, by setting different network functions that implement different functions independently, the embodiments of the disclosure solve the technical problems of complex service updates and long development cycles by making it possible to update each network function without updating the entire gNB-CU-CP.

The method and the apparatus are based on the same technical concepts. Since the method and the apparatus solve problems in similar ways, the implementations of the apparatus and the method can refer to each other, and the repeated parts will not be described again.

The embodiments of the disclosure provide an RAN architecture-based communication method. The method is applied to a first network function on an RAN CP, and includes:
receiving a setup signaling transmission request from a UE through a third network function;
generating a first UE signaling context with the third network function according to the setup signaling transmission request; and
sending a signaling transmission indication to a second network function;
in which the signaling transmission indication is used to establish signaling interactions between the second network function and the third network function.

The embodiments of the disclosure provide another RAN architecture-based communication method. The method is applied to a second network function on an RAN CP, and includes:
receiving a signaling transmission indication sent by a first network function; and
establishing signaling interactions with a third network function indicated in the signaling transmission indication according to the signaling transmission indication;
in which the first network function is a network function on the RAN CP that is independent of the second network function.

The communication methods performed by the first network function and the second network function respectively will be jointly explained.

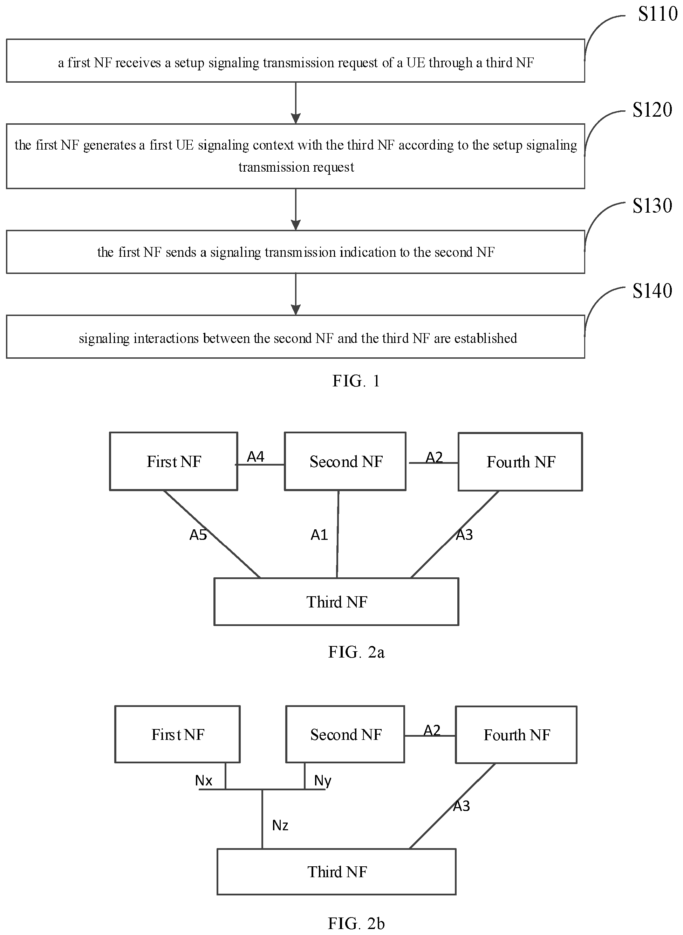

FIG. 1 is a flowchart of a communication method applied to a base station provided by the embodiments of the disclosure. As illustrated in FIG. 1, the method includes the following steps.

At step S110, a first network function receives a setup signaling transmission request of a UE through a third network function.

In detail, in the embodiments of the disclosure, network function (NF) refers to a functional module that performs a specific task or provides a specific service in a communication network.

The first NF includes one or more following functions: (1) controlling generation, modification, release or deletion of signaling for access control, radio resource control (RRC), paging and mobility between the UE and an RAN, and (2) controlling generation, modification, release or deletion of signaling in the RAN for access control, RRC, paging and mobility between the RAN and a core network (CN).

In some embodiments, the first NF may further include a wireless connection management function. It may also be called a wireless connection control function, a wireless mobility management function, a wireless mobility control function, a wireless access and mobility management function, a wireless access and mobility control function, a wireless connection registration mobility management function or a wireless connection registration mobility control function, etc., which is not particularly defined herein.

The third NF includes functions for transmitting UE CP signaling, CP data and user plane data, and includes functions of a radio link control (RLC) entity, a media access control (MAC) entity and part or all of functions of a physical (PHY) entity.

At step S120, the first NF generates a first UE signaling context with the third NF according to the setup signaling transmission request.

In detail, the first UE signaling context, i.e., a first signaling or a signaling radio bearer (SRB), refers to a set of signaling information related to a specific UE. The information is used to describe a state, a configuration and an activity of the UE in the communication network. It includes various key signaling parameters, such as an ID, a connection state, ongoing service types and used wireless resource configurations of the UE.

The first UE signaling context is used for signaling interactions between the first NF and the third NF serving the UE. In addition, the first UE signaling context may further include identification information of a second NF, such as a second NF ID or a second NF address. The identification information of the second NF is used to establish signaling interactions between the third NF and the second NF serving the UE.

The types of information transmitted in the signaling interactions between the first NF and the third NF serving the UE are relevant to the types of information transmitted in the signaling interactions between the second NF and the third NF serving the UE. For example, data transferred between the first NF and the third NF is service control information, and data transferred between the second NF and the third NF is session data.

For example, the first UE signaling context is an access layer signaling generated by the RAN and the UE. The first NF controls generation, modification, release or deletion of the first UE signaling context in the RAN as well as generation, modification, release or deletion of the first UE signaling context in the UE. The first UE signaling context is used for, but not limited to, at least one of radio access control, wireless resource control, measurement configuration, data collection or handover decision.

In some embodiments, generating, modifying, releasing or deleting the first UE signaling context in the RAN or the UE includes: generating, modifying, releasing or deleting a processing entity or sub-signaling related to the first UE signaling context in the RAN or the UE. The processing entity related to the first UE signaling context may be, for example, one of a PHY entity, an RLC entity, a packet data convergence protocol (PDCP) entity and an RRC entity. The sub-signaling related to the first UE signaling context may be, for example, one of a bearer, a F1 application protocol (F1AP), an E1, an Xn-U (user plane), an Xn-C (CP), registration and handover.

At step S130, the first NF sends a signaling transmission indication to the second NF.

In detail, the signaling transmission indication sent by the first NF to the second NF includes a third NF ID or a third NF address.

The second NF supports one or more of the following functions: wireless user plane transmission management, radio bearer management, wireless network opening and wireless data management. The first NF and the second NF are NFs on the RAN CP that are independent of each other.

In some embodiments, the second NF supports the wireless user plane transmission management function. It may also be called wireless user plane transmission control function, a radio bearer management function, radio bearer control function, wireless session management function, wireless session control function, wireless session resource management function or wireless session resource control function, which is not particularly defined herein.

At step S140, signaling interactions between the second NF and the third NF are established.

In the embodiments of the disclosure, in the signaling transmission indication sent by the first NF to the second NF, the third NF ID or the third NF address included in the instruction is used to indicate a specific identity of the third NF. After receiving the signaling transmission indication, the second NF obtains the third NF ID or the third NF address from the signaling transmission indication, so that the signaling interactions between the second NF and the third NF are established according to the obtained third NF ID or the third NF address.

In some other embodiments of the disclosure, in addition to the first NF, the second NF and the third NF, the RAN NFs may further include other NFs that are independent of the first NF, the second NF and the third NF. For example, in the following embodiments of the disclosure, the RAN NFs may further include a fourth NF, which is not particularly defined herein.

The technical solutions of the embodiments of the disclosure are further illustrated based on different RAN architectures.

### Embodiment 1

The RAN architecture includes the first NF, the second NF, the third NF and the fourth NF. The first NF supports the wireless connection management function, and the second NF supports the wireless user plane transmission management function. The third NF is used for transmission of UE CP signaling, CP data and user plane data, and it carries functions of a RLC entity, a MAC entity and part or all of functions of a PHY entity. Some PHY layer functions may be upper-PHY layer functions. The fourth NF is mainly used for UE user plane data transmission, and it carries/supports/contains functions of data encryption/decryption, integrity protection/verification, and mapping of user plane data to base station protocol stacks.

FIG. 2a is a schematic diagram of a type-1 RAN architecture in Embodiment 1. All the NFs in the architecture interact with each other through point-to-point interfaces. In detail, the first NF interacts with the second NF through point-to-point interfaces, the first NF interacts with the third NF through point-to-point interfaces, the second NF interacts with the third NF through point-to-point interfaces, the second NF interacts with the fourth NF through point-to-point interfaces, and the third NF interacts with the fourth NF through point-to-point interfaces.

FIG. 2b is a schematic diagram of a type-2 RAN architecture in Embodiment 1. Some NFs interact with each other through service-oriented interfaces, while others interact with each other through point-to-point interfaces. In detail, the first NF interacts with the second NF through service-oriented interfaces, the first NF interacts with the third NF through service-oriented interfaces, the second NF interacts with the third NF through service-oriented interfaces, the second NF interacts with the fourth NF through point-to-point interfaces, and the third NF interacts with the fourth NF through point-to-point interfaces.

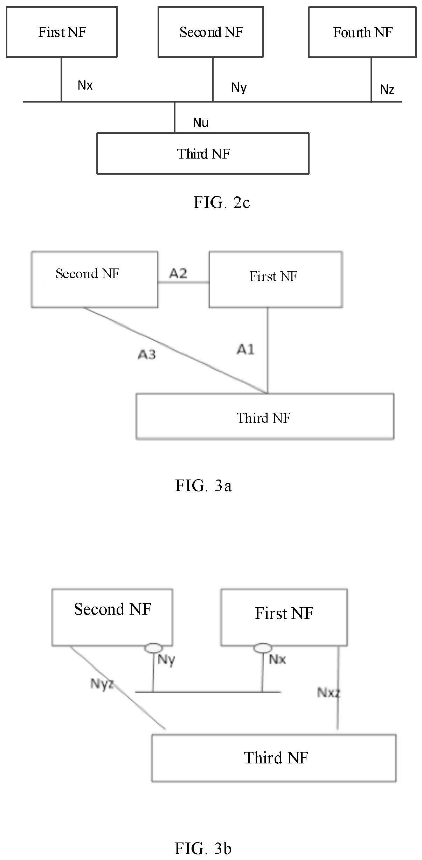

FIG. 2c is a schematic diagram of a type-3 RAN architecture in Embodiment 1. All the NFs interact with each other through service-oriented interfaces. In detail, the first NF interacts with the second NF through service-oriented interfaces, the first NF interacts with the third NF through service-oriented interfaces, the second NF interacts with the third NF through service-oriented interfaces, the second NF interacts with the fourth NF through service-oriented interfaces, and the third NF interacts with the fourth NF through service-oriented interfaces.

In FIGs. 2a, 2b and 2c, A1, A2, A3, A4 and A5 represent point-to-point interfaces, Nx, Ny, Nz and Nu represent service-oriented interfaces. In addition, the above illustrated architectures are only examples, and any modification made to interfaces should fall within the scope of the disclosure. The service-oriented NFs in the above architecture interact with each other through the service-oriented interfaces, non-service-oriented NFs interact with service-oriented NFs through point-to-point interfaces, and non-service-oriented NFs interact with each other through point-to-point interfaces. For example, in FIG. 2b, the fourth NF is a non-service-oriented NF, and both the second NF and the third NF interact with the fourth NF through point-to-point interfaces.

In this embodiment, when the UE needs to access the network for signaling interactions, the UE accesses the RAN through the third NF, and requests the first NF to establish a wireless resource connection. After the wireless connection is established, the first NF requests the third NF to generate the UE signaling context. The UE signaling context may carry a public land mobile network (PLMN) ID, the second NF ID and a fourth NF ID. The first NF may send the signaling transmission indication to the second NF, which may carry a third NF ID and the fourth NF ID, to generate one or more bearers for the UE. After receiving the signaling transmission indication sent by the first NF, the second NF requests the third NF to generate one or more data bearers for the UE according to the third NF ID carried in the signaling transmission indication. The second NF stores and uses the third NF ID and the fourth NF ID, so that it can establish signaling interactions with the third NF and the fourth NF.

In the above, the ID can be replaced by an address. For example, the second NF ID, the third NF ID and the fourth NF ID can be replaced by the second NF address, a third NF address and a fourth NF address, respectively.

In some embodiments, the second NF sends the third NF ID or the third NF address to the fourth NF. The fourth NF stores and uses the third NF ID or the third NF address, and generates a data transmission bearer with the third NF, thus realizing data transmission between the fourth NF and the third NF. The fourth NF may also transfer user plane data with the UE through the third NF.

Optionally, the first NF receives a UE signaling generating/modifying/releasing/deleting request information. The request information includes related registration types, slice information, Access Network (AN) parameters, security parameters and UE capability information. The UE signaling generating/modifying request information further includes a measurement report, and a connection is established for UE signaling, such as RRC signaling. The first NF needs to control the generation, modification, release or deletion of the first UE signaling context as well as generation, modification, release or deletion of a second UE signaling context in the RAN. The second UE signaling context refers to interaction signaling between the RAN and the CN. In detail, the first NF generates the second UE signaling context with the fifth NF according to the setup information transmission request. The fifth NF is a function in the CN.

The first NF determines relevant information for generating the first UE signaling context and relevant information for generating the second UE signaling context according to the UE signaling generating request information. The first NF determines relevant information for modifying the first UE signaling context and relevant information for modifying the second UE signaling context according to the UE signaling modifying request information. The first NF determines relevant information for releasing the first UE signaling context and relevant information for releasing the second UE signaling context according to the UE signaling releasing request information. The first NF determines relevant information for deleting the first UE signaling context and relevant information for deleting the second UE signaling context according to the UE signaling deleting request information. In the above, the relevant information for generating, modifying, releasing or deleting the first UE signaling context includes one or more first UE signaling context IDs. The relevant information for generating or modifying the first UE signaling context further indicates related parameters of one or more first UE signaling contexts, one of the third NF ID and the third NF address, and one of the fourth NF ID and the fourth NF address. The related information for generating or modifying the second UE signaling context further includes the fifth NF ID or the fifth NF address, a target wireless access function, a transparent container from source to target, a handover flag and Session Management (SM) information.

The first NF sends the request information for generating/modifying/releasing/deleting the first UE signaling context to the third NF. In the above, the request information for generating/modifying/releasing/deleting the first UE signaling context may indicate one or more first UE signaling context IDs. The generation or modification request information may further indicate related parameters of one or more first UE signaling contexts, one of the second NF ID and the second NF address, and one of the fourth NF ID and the fourth NF address. The related parameters of one or more first UE signaling contexts include one or more of the following: bearer mapping and forwarding control policy rules of the one or more first UE signaling contexts. The related parameters of the first UE signaling contexts include one or more of the following: RRC connection and scheduling parameters of the first UE signaling contexts such as cell radio network temporary identity (C-RNTI), IDs of UEs in an RRC deactivated state such as inactive RNTI (I-RNTI), paging UE parameters such as system architecture evolution (SAE) temporary mobile station ID (S-TMSI), paging area parameters of the UEs in the RRC deactivated state such as RAN notification area (RNA).

The third NF generates, modifies, releases or deletes the first UE signaling context. In detail, the third NF generates, modifies, releases or deletes RLC entities, MAC entities, bearers, PHY channels and logical channels corresponding to the first UE signaling context. The third NF determines the RLC entities, the MAC entities, the bearers, the PHY channels and the logical channels according to related parameters of the first UE signaling context after receiving relevant information for generating or modifying the first UE signaling context. The third NF stores and uses the fourth NF ID or the fourth NF address.

The third NF sends response information to the first NF. The response information includes one or more of: one or more first UE signaling context generation or modification success/failure information, and the third NF ID or the third NF address.

The first NF sends to the UE indication information for generating, modifying, releasing or deleting the first UE signaling context. The indication information includes one or more first UE signaling context IDs. The one or more first UE signaling contexts may be first UE signaling contexts that have been successfully generated or modified in the RAN. The generation or modification indication information may indicate related parameters of one or more first UE signaling contexts, which include bearer mapping, data bearer, forwarding control policy parameters, and security parameters of the one or more first UE signaling contexts.

The UE sends to the first NF response information for generating, modifying, releasing or deleting the first UE signaling context. The response information includes generation success or failure information of one or more first UE signaling contexts.

The first UE signaling context is generated among the UE, the third NF and the first NF, and the second UE signaling context is generated between the first NF and the CN. After both the first UE signaling context and the second UE signaling context are generated, the UE transmits control information through the first UE signaling context and the second UE signaling context.

### Embodiment 2

The RAN architecture includes the first NF, the second NF and the third NF. The first NF supports the wireless connection management function, and the second NF supports the wireless user plane transmission management function. The third NF is used for transmission of UE CP signaling, CP data and user plane data, and it carries functions of a RLC entity, a MAC entity and some or all of functions of a PHY entity. Some PHY layer functions may be upper-PHY layer functions. The second NF is also used for UE user plane data transmission, and it carries/supports/contains functions of data encryption/decryption, integrity protection/verification, and mapping of user plane data to base station protocol stacks. Compared with Embodiment 1, the second NF in Embodiment 2 is equivalent to a combination of the second NF and the fourth NF in Embodiment 1.

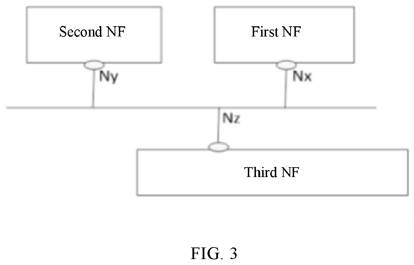

FIG. 3a is a schematic diagram of a type-1 RAN architecture in Embodiment 2. All the NFs interact through point-to-point interfaces. In detail, the first NF interacts with the second NF through point-to-point interfaces, the first NF interacts with the third NF through point-to-point interfaces, and the second NF interacts with the third NF through point-to-point interfaces.

FIG. 3b is a schematic diagram of a type-2 RAN architecture in Embodiment 2. Some NFs interact with each other through service-oriented interfaces, while others interact with each other through point-to-point interfaces. In detail, the first NF interacts with the second NF through service-oriented interfaces, the first NF interacts with the third NF through point-to-point interfaces, and the second NF interacts with the third NF through point-to-point interfaces.

FIG. 3c is a schematic diagram of a type-3 RAN architecture in Embodiment 2. All the NFs interact with each other through service-oriented interfaces. In detail, the first NF interacts with the second NF through service-oriented interfaces, the first NF interacts with the third NF through service-oriented interfaces, and the second NF interacts with the third NF through service-oriented interfaces.

In FIGs. 3a, 3b and 3c, A1, A2, A3, Nxz and Nyz represent point-to-point interfaces, and Nx, Ny and Nz represent service-oriented interfaces. In addition, the above illustrated architectures are only examples, and any modification made to interfaces should fall within the scope of the disclosure. The service-oriented NFs in the above architecture interact with each other through the service-oriented interfaces, non-service-oriented NFs interact with service-oriented NFs through point-to-point interfaces, and non-service-oriented NFs interact with each other through point-to-point interfaces. For example, in FIG. 3b, the third NF is a non-service-oriented NF, and the first NF and the second NF interact with the third NF through point-to-point interfaces.

In this embodiment, when the UE needs to access the network for signaling interactions, the UE accesses the RAN through the third NF, and requests the first NF to establish a wireless resource connection. After the wireless connection is established, the first NF requests the third NF to generate a UE signaling context. The UE signaling context may carry a PLMN ID and a second NF ID. The first NF may send a signaling transmission indication to the second NF, which may carry a third NF ID, to generate one or more bearers for the UE. The second NF requests the third NF to generate one or more data bearers for the UE, and it also stores and uses the third NF ID for signaling interactions with the third NF.

In the above, the ID can be replaced by an address. For example, the second NF ID and the third NF ID can be replaced by a second NF address and a third NF address, respectively.

In some embodiments, the second NF stores and uses the third NF ID or the third NF address, and generates a data transmission bearer with the third NF, thus realizing data transmission with the third NF. The second NF may also transfer user plane data with the UE through the third NF.

Optionally, the first NF receives a UE signaling generating/modifying/releasing/deleting request information. The request information includes related registration types, slice information, AN parameters, security parameters and UE capability information. The generating/modifying request information also includes a measurement report, and a connection is established for UE signaling, such as RRC signaling. The first NF needs to control the generation, modification, release or deletion of a first UE signaling context as well as generation, modification, release or deletion of a second UE signaling context in an RAN. The second UE signaling context refers to interaction signaling between the RAN and a CN. In detail, the first NF generates the second UE signaling context with a fifth NF according to a setup information transmission request. The fifth NF is a function in the CN.

The first NF determines relevant information for generating the first UE signaling context and relevant information for generating the second UE signaling context according to the UE signaling generating request information. The first NF determines relevant information for modifying the first UE signaling context and relevant information for modifying the second UE signaling context according to the UE signaling modifying request information. The first NF determines relevant information for releasing the first UE signaling context and relevant information for releasing the second UE signaling context according to the UE signaling releasing request information. The first NF determines relevant information for deleting the first UE signaling context and relevant information for deleting the second UE signaling context according to the UE signaling deleting request information. In the above, the relevant information for generating, modifying, releasing or deleting the first UE signaling context includes one or more first UE signaling context IDs. The relevant information for generating or modifying the first UE signaling context also indicates related parameters of one or more first UE signaling contexts, and the third NF ID or the third NF address. The related information for generating or modifying the second UE signaling context also includes a fifth NF ID or a fifth NF address, a target wireless access function, a transparent container from source to target, a handover flag and SM information.

The first NF sends the request information for generating/modifying/releasing/deleting the first UE signaling context to the third NF. In the above, the request information for generating/modifying/releasing/deleting the first UE signaling context may indicate one or more first UE signaling context IDs. The generation or modification request information may also indicate related parameters of one or more first UE signaling contexts, and the second NF ID or the second NF address. The related parameters of one or more first UE signaling contexts include one or more of the following: bearer mapping and forwarding control policy rules of the one or more first UE signaling contexts. The related parameters of the first UE signaling contexts include one or more of the following: RRC connection and scheduling parameters of the first UE signaling contexts such as C-RNTI, IDs of UEs in an RRC deactivated state such as I-RNTI, paging UE parameters such as S-TMSI, paging area parameters of the UEs in the RRC deactivated state such as RNA.

The third NF generates, modifies, releases or deletes the first UE signaling context. In detail, the third NF generates, modifies, releases or deletes RLC entities, MAC entities, bearers, PHY channels and logical channels corresponding to the first UE signaling context. The third NF determines the RLC entities, the MAC entities, the bearers, the PHY channels and the logical channels according to related parameters of the first UE signaling context after receiving relevant information for generating or modifying the first UE signaling context. The third NF stores and uses the second NF ID or the second NF address.

The third NF sends response information to the first NF. The response information includes one or more of: one or more first UE signaling context generation or modification success/failure information, and the third NF ID or the third NF address.

The first NF sends to the UE indication information for generating, modifying, releasing or deleting the first UE signaling context. The indication information includes one or more first UE signaling context IDs. The one or more first UE signaling contexts may be first UE signaling contexts that have been successfully generated or modified in the RAN. The generation or modification indication information may indicate related parameters of one or more first UE signaling contexts, which include bearer mapping, data bearer, forwarding control policy parameters, and security parameters of the one or more first UE signaling contexts.

The UE sends to the first NF response information for generating, modifying, releasing or deleting the first UE signaling context. The response information includes generation success or failure information of one or more first UE signaling contexts.

The first UE signaling context is generated among the UE, the third NF and the first NF, and the second UE signaling context is generated between the first NF and the CN. After both the first UE signaling context and the second UE signaling context are generated, the UE transmits control information through the first UE signaling context and the second UE signaling context.

### Embodiment 3

In this embodiment, based on the RAN architecture in Embodiment 2, the fifth NF is a function in the CN, which is used to control/manage the second UE signaling context of the UE. The first NF and the fifth NF may interact through service-oriented interfaces, or they may interact through point-to-point interfaces. In addition, the fifth NF may directly or indirectly send information to the first NF. For example, the fifth NF sends the information indirectly, it sends the information to a relay NF, so that the relay NF can forward the information to the first NF. The first NF can also send information to the fifth NF directly or indirectly. When the first NF sends the information indirectly, it sends the information to a relay NF, so that the relay NF can forward the information to the fifth NF.

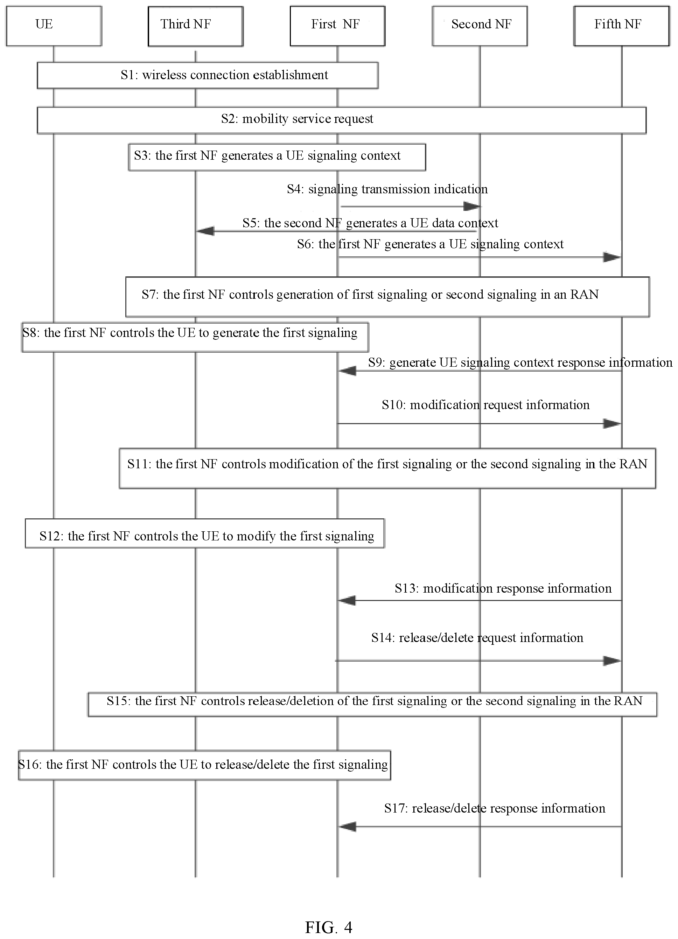

FIG. 4 is a flowchart of controlling/managing UE signaling transmission in the embodiments of the disclosure. When the RAN includes a first NF, the procedure for managing UE signaling transmission is provided in the following (it should be noted that the way of exchanging information between NFs in the procedure is not particularly defined herein).

S1: a UE establishes a wireless connection with a first NF through a third NF.

S2: the UE initiates a setup signaling transmission request to an RAN, which is used for mobility-related services, such as wireless connection, handover, RRC, paging and other services.

S3: the RAN receives the service-related request, and the first NF and the third NF generate a first UE signaling context, namely, a first signaling, which is also called an SRB.

S4: the first NF sends a signaling transmission indication to a second NF to indicate that the wireless connection between the first NF and the UE has been established, and the signaling transmission indication carries a third NF ID or a third NF address.

S5: the second NF generates a UE data context, that is, data radio bearer (DRB), to the third NF.

S6: the first NF instruct the fifth NF to generate a UE signaling context, which is mainly used for generating a second UE signaling context.

S7: the first UE signaling context and the second UE signaling context are established in the RAN, and after establishing the connection through the first UE signaling context and the second UE signaling context, the UE has accessed the network and can carry out related services.

S8: the first NF controls the UE to generate the first UE signaling context.

S9: after generating the first UE signaling context, the fifth NF sends setup response information to the first NF.

S10: the first NF sends modification request information of the second UE signaling context to the fifth NF to trigger a change of the fifth NF of the CN, and then generates a second UE signaling context with a new fifth NF.

S11: the first NF modifies the first UE signaling context and the second UE signaling context.

S12: the first NF controls the UE to modify the first UE signaling context.

S13: after the modification of the second UE signaling context is completed, the fifth NF sends modification response information to the first NF.

S14: the first NF sends release or deletion request information of the second UE signaling context to the fifth NF, for example, to disable the fifth NF.

S15: the first NF releases or deletes the first UE signaling context and the second UE signaling context.

S16: the first NF controls the UE to release or delete the first UE signaling context.

S17: after the second UE signaling context is released or deleted, the fifth NF sends release or deletion response information to the first NF.

In the above, generating, modifying, releasing or deleting the second UE signaling context includes: generating, modifying, releasing or deleting a processing entity or sub-signaling related to the second UE signaling context. Generating or modifying the second UE signaling context includes storing and using a peer address/ID of the second UE signaling context. Generating, modifying, releasing or deleting the second UE signaling context in the RAN also includes: applying related parameters of the second UE signaling context to the processing entity or sub-signaling related to the second UE signaling context.

The related parameters of the second UE signaling context include one or more of: a parameter for identifying an access and mobility management function (AMF) of the second UE signaling context (e.g., AMF Name), an ID for identifying the UE in the CN (e.g., subscription permanent ID (SUPI)), a parameter for identifying a wireless NF (gNB ID), a parameter of a paging UE (e.g., 5G-globally unique temporary ID (GUTI)), a parameter of a paging area of the UE in an idle state (e.g., tracking area (TA)).

It should be noted that in the embodiments of the disclosure, the information of the same transmitter or receiver can be sent in the same message or in different messages. In addition, every step in each embodiment of the disclosure is not necessary, and the steps in each embodiment are not limited to sequential execution. Some steps may be executed in parallel or in different orders. Additional steps, sub-steps or phases may be included in the existing steps. These sub-steps or phases are not necessarily executed simultaneously at the same moment, but may be performed at different times. Their execution sequence is also not necessarily sequential. Instead, they may be executed in turn or alternately with at least some other steps, or other sub-steps or phases of other steps.

In the embodiments of the disclosure, the first NF generates, modifies, releases or deletes a UE context. The UE context of the first NF includes: a UE ID, and one or more IDs, capabilities, gNB IDs, single network slice selection assistance information (S-NSSAI) of NFs used for UE registration; and a session type, a session and service continuity (SSC) mode, a protocol data unit (PDU) session ID and existing session lists used for UE session setting. Other NFs, for example, the second NF, may request the first NF to generate, modify, release or delete the UE context through a service-oriented interface or a point-to-point interface of the first NF. The request information includes a UE ID and one or more IDs/addresses of NFs used for wireless mobility connection management of the UE in the RAN. The first NF stores the UE context after receiving the request information for generating the UE context, and sends response information as a reply. The response information includes one or more of: UE context generation success or failure information, and a UE ID in the first NF. After receiving request information for modifying the UE context, the first NF changes the one or more IDs/addresses of NFs used for wireless mobility connection management of the UE in the RAN into IDs or addresses in the request information. The first NF releases or deletes the corresponding UE context in the first NF after receiving request information for releasing or deleting the UE context.

In the above, request information for generating/modifying/releasing/deleting UE signaling resources may be included in the request information for generating, modifying, releasing or deleting the UE context information and sent together to the first NF. Or, request information for generating, modifying, releasing or deleting UE user plane data transmission resources may also be sent to the first NF together with information for generating, modifying, releasing or deleting UE context information. In an implementation, the request information for releasing or deleting UE signaling resources is the same as the request information for releasing or deleting UE context information.

After receiving the request information for generating, modifying, releasing or deleting UE signaling resources, the first NF generates, modifies, releases or deletes resources for related signaling according to contents included in the request information, including controlling generation, modification, release or deletion of the first UE signaling context as well as generation, modification, release or deletion of the second UE signaling context in the RAN.

The first NF sends request information through one or more service-oriented interfaces or point-to-point interfaces of NFs used for wireless connection management of the UE. The request information includes a UE ID, and it further includes one or more of the following: relevant information for generating, modifying, releasing or deleting the first UE signaling context, and relevant information for generating, modifying, releasing or deleting the second UE signaling context. The relevant information for generating, modifying, releasing or deleting the first UE signaling context includes: one or more first UE signaling context IDs. The relevant information for generating or modifying the first UE signaling context may further indicate related parameters of one or more first UE signaling contexts, and it may also include address information or ID information of other NFs used for wireless connection management of the UE in the RAN, which is equivalent to address information or ID information of peers of the first UE signaling contexts. The relevant information for generating, modifying, releasing or deleting the second UE signaling context includes: an ID for generating UE signaling, and it may also include address information or ID information of peers of second UE signaling contexts. In an implementation, the relevant information for releasing or deleting the first UE signaling context is the same as the relevant information for releasing or deleting the second UE signaling context.

The base station involved in the embodiments of the disclosure may be a base station including a plurality of cells providing services to the terminal. Depending on the application scenario, the base station may be referred to as an access point or a device in the access network that communicates with the wireless terminal over one or more disk sectors on a radio interface, or by other names. The base station may exchange received radio frames with internet protocol (IP) packets, acting as a router between the wireless terminal and a remaining portion of the access network. The remaining portion of the access network includes an IP communication network. The network device may also be used for management coordination of attributes of the radio interface. The base station may include a centralized unit (CU) and a plurality of distributed units (DUs), and the CU and the DUs are physically separated.

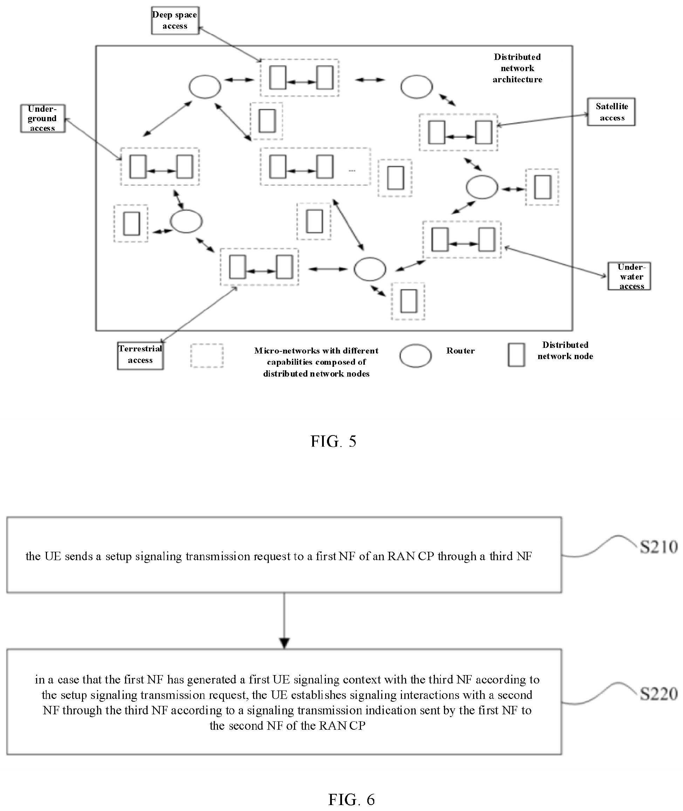

The embodiments of the disclosure are suitable for 6G network. The newly emerging services of 6G network have personalized requirements, which requires the network to have the capability to flexibly adapt to the service requirements. Realizing NF customization on demand and NF flexibility and scalability requires more agile network service capabilities and needs to meet the needs of fast development of services. Meanwhile, the trend of 6G network is centralized and distributed network architecture. Taking 6G distributed network architecture shown in FIG. 5 as an example, 6G network will face diverse scenarios and network performance requirements of air, space, ground and sea, and it is difficult for centralized network architecture to meet requirements of all scenarios uniformly. In order to meet this challenge, 6G network architecture needs to go beyond centralized control and gradually evolve towards a distributed architecture. It will build distributed network nodes with different functions, and these distributed network nodes will form autonomous distributed mini-networks according to service requirements across domains, and provide targeted network services according to specific service scenarios, user scale, geographical environment and other requirements. 6G network will build distributed network nodes with different functions, which will lead to the differentiation of 6G RAN. The functions of 6G RAN also need to be adapted to the functions of distributed nodes. That is, the functions of 6G RAN will be tailored, customized and expanded as needed, or the functions of 6G RAN will be further integrated with NFs of distributed nodes to meet the requirements of some extreme service indicators. The embodiments of the disclosure can meet the requirements of rapid development of RAN services, NF customization on demand, NF flexibility and scalability, and further integration of NFs on the RAN and the CN.

FIG. 6 is a flowchart of a communication method applied to a UE provided by the embodiments of the disclosure. As illustrated in FIG. 6, the method includes the following steps.

At step S210, the UE sends a setup signaling transmission request to a first NF of an RAN CP through a third NF.

At step S220, in a case that the first NF has generated a first UE signaling context with the third NF according to the setup signaling transmission request, the UE establishes signaling interactions with a second NF through the third NF according to a signaling transmission indication sent by the first NF to the second NF of the RAN CP.

In the above, the first UE signaling context is an access layer signaling generated between the RAN and the UE, and the first NF and the second NF are NFs in the RAN CP that are independent of each other.

In some embodiments, the UE establishing the signaling interactions between the second NF and the third NF according to the signaling transmission indication sent by the first NF to the second NF of the RAN CP includes: the UE establishing the signaling interactions between the second NF and the third NF according to a third NF ID or a third NF address sent by the first NF to the second NF for it to store and use.

In some embodiments, the method further includes: the UE generating a data transmission bearer with the second NF through the third NF in a case that the third NF ID or the third NF address is stored and used by the second NF.

In some embodiments, the method further includes: the UE generating a data transmission bearer with a fourth NF through the third NF in a case that the second NF has sent the third NF ID or the third NF address to the fourth NF, and the fourth NF has stored and used the third NF ID or the third NF address.

In some embodiments, in the case that the first NF and the UE have generated the first UE signaling context, the UE sends response information to the first NF.

The UE involved in the embodiments of the disclosure may be a USB storage device, other personal computer memory devices or a dongle, which can communicate with one or more CNs via an RAN. The UE may be a mobile terminal such as a cell phone (or "cellular" phone), or a computer having a mobile terminal, e.g., a portable, pocket-sized, handheld, computer-built or vehicle-mounted mobile device that is capable of exchanging language and/or data with the RAN. The UE may be a personal communication service (PCS) phone, a cordless phone, a session-initiated protocol (SIP) phone, a wireless local loop (WLL) station, a personal digital assistant (PDA), a personal computer, a tablet computer, a machine-type communication (MTC) terminal or other devices. The UE may also be referred to as a system, a subscriber unit, a subscriber station, a mobile station, a mobile, a remote station, an access point, a remote terminal, an access terminal, a user terminal, a user agent, a user device, a wireless accessing device or a router/modem that meets the restrictions of this definition, which is not limited in the embodiments of the disclosure.

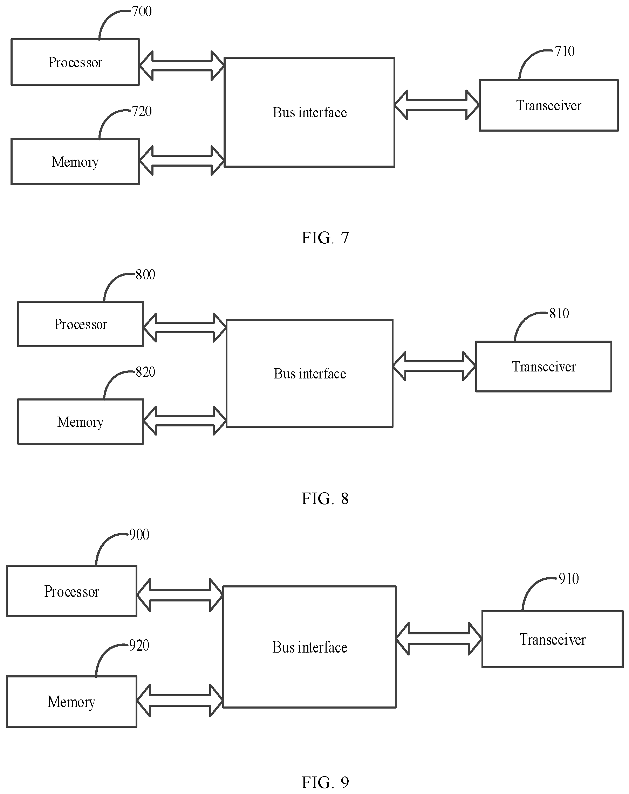

FIG. 7 is a schematic diagram of a communication apparatus provided by the embodiments of the disclosure. The apparatus is applied to a first NF of an RAN CP at a base station side. The communication apparatus includes a processor 700 for reading programs in a memory 720 and executing the following processes:
receiving a setup signaling transmission request from a UE through a third NF;
generating a first UE signaling context with the third NF according to the setup signaling transmission request; and
sending a signaling transmission indication to a second NF;
in which the signaling transmission indication is used to establish signaling interactions between the second NF and the third NF, and the second NF is a NF on the RAN CP that is independent of the first NF.

A transceiver 710 is configured to receive and transmit data under the control of the processor 700.

In FIG. 7, a bus architecture includes any number of interconnected buses and bridges, specifically one or more processors represented by the processor 700 and various circuits of memories represented by the memory 720 that are linked together. The bus architecture may also link peripheral devices, voltage regulators, and various other circuits such as power management circuits together, which are well known in the art and will not be further described in the disclosure. There is a bus interface that is provided as an interface. The transceiver 710 includes a plurality of components, such as a transmitter and a receiver, for providing units that can communicate with other devices over transmission mediums. The transmission mediums include wireless channels, wired channels, fiber optic cables, etc. The processor 700 is responsible for managing the bus architecture and general processing, and the memory 720 stores data used by the processor 700 when performing operations.

The processor 700 may be a central processing unit (CPU), an application specific integrated circuit (ASIC), a field-programmable gate array (FPGA) or a complex programmable logic device (CPLD). The processor may also adopt a multi-core architecture.

It is noted that the above apparatus provided by the embodiments of the disclosure can implement all the steps in the methods of the above method embodiments, and can achieve the same technical effects. Therefore, the same parts and beneficial effects in the method embodiments will not be repeated herein.

FIG. 8 is a schematic diagram of a communication apparatus provided by the embodiments of the disclosure. The apparatus is applied to a second NF of an RAN CP at a base station side. The communication apparatus includes a processor 800 for reading programs in a memory 820 and executing the following processes:
receiving a signaling transmission indication sent by a first NF; and
establishing signaling interactions with a third NF indicated in the signaling transmission indication according to the signaling transmission indication;
in which the first NF is a NF on the RAN CP that is independent of the second NF.

A transceiver 810 is configured to receive and transmit data under the control of the processor 800.

In FIG. 8, a bus architecture includes any number of interconnected buses and bridges, specifically one or more processors represented by the processor 800 and various circuits of memories represented by the memory 820 that are linked together. The bus architecture may also link peripheral devices, voltage regulators, and various other circuits such as power management circuits together, which are well known in the art and will not be further described in the disclosure. There is a bus interface that is provided as an interface. The transceiver 810 includes a plurality of components, such as a transmitter and a receiver, for providing units that can communicate with other devices over transmission mediums. The transmission mediums include wireless channels, wired channels, fiber optic cables, etc. A user interfaces 830 may be an interface capable of externally connecting different types of UEs when needed, including but not limited to a keypad, a display, a speaker, a microphone, a joystick and the like.

The processor 800 is responsible for managing the bus architecture and usual processing, and the memory 820 may store data used by the processor 800 when performing operations.

Optionally, the processor 800 may be a CPU, an ASIC, a FPGA or a CPLD. The processor may also adopt a multi-core architecture.

The processor 800 is used to perform any of the methods provided by the embodiments of the disclosure according to obtained executable instructions by calling the programs stored in the memory. The processor 800 and the memory 820 may be physically separated.

It should be noted that the apparatus provided by the embodiments of the disclosure can execute all the steps in the above method embodiments and achieve the same technical effects. The same parts and beneficial effects in the method embodiments will not be described in detail herein.

FIG. 9 is a schematic diagram of a communication apparatus provided by the embodiments of the disclosure. The apparatus is applied to a UE. The communication apparatus includes a processor 900 for reading programs in a memory 920 and executing the following processes:
sending a setup signaling transmission request to a first NF on an RAN CP through a third NF, in which the setup signaling transmission request is used to instruct the first NF to generate a first UE signaling context with the third NF;
establishing signaling interactions with a second NF through the third NF in a case that the first NF has generated the first UE signaling context with the third NF according to the setup signaling transmission request;
in which the first NF and the second NF are NFs on the RAN CP that are independent of each other.

A transceiver 910 is configured to receive and transmit data under the control of the processor 900.

In FIG. 9, a bus architecture includes any number of interconnected buses and bridges, specifically one or more processors represented by the processor 900 and various circuits of memories represented by the memory 920 that are linked together. The bus architecture may also link peripheral devices, voltage regulators, and various other circuits such as power management circuits together, which are well known in the art and will not be further described in the disclosure. There is a bus interface that is provided as an interface. The transceiver 910 includes a plurality of components, such as a transmitter and a receiver, for providing units that can communicate with other devices over transmission mediums. The transmission mediums include wireless channels, wired channels, fiber optic cables, etc. A user interfaces 930 may be an interface capable of externally or internally connecting different types of UEs when needed, including but not limited to a keypad, a display, a speaker, a microphone, a joystick and the like.

The processor 900 is responsible for managing the bus architecture and usual processing, and the memory 920 may store data used by the processor 900 when performing operations.

Optionally, the processor 900 may be a CPU, an ASIC, a FPGA or a CPLD. The processor may also adopt a multi-core architecture.

The processor 900 is used to perform any of the methods provided by the embodiments of the disclosure according to obtained executable instructions by calling the programs stored in the memory. The processor 900 and the memory 920 may be physically separated.

It should be noted that the apparatus provided by the embodiments of the disclosure can execute all the steps in the above method embodiments and achieve the same technical effects. The same parts and beneficial effects in the method embodiments will not be described in detail herein.

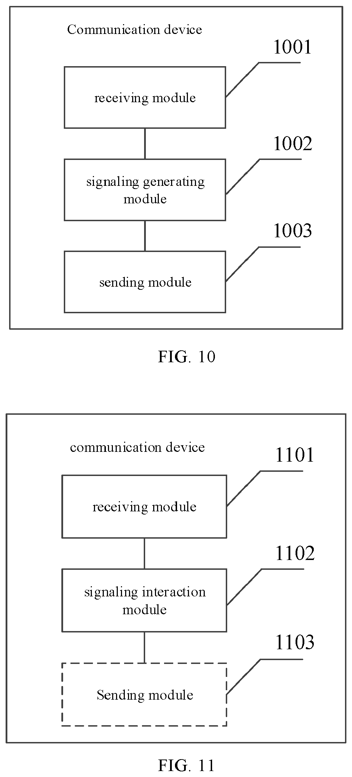

As illustrated in FIG. 10, the embodiments of the disclosure provide an RAN architecture-based communication device. The communication device is applied to a first NF of an RAN CP, and includes:
a receiving module 1001, configured to receive a setup signaling transmission request from a UE through a third NF;
a signaling generating module 1002, configured to generate a first UE signaling context with the third NF according to the setup signaling transmission request; and
a sending module 1003, configured to send a signaling transmission indication to a second NF;
in which the signaling transmission indication is used to establish signaling interactions between the second NF and the third NF, and the second NF is a NF on the RAN CP that is independent of the first NF.

Optionally, the first NF interacts with the second NF through service-oriented interfaces or point-to-point interfaces; and/or
the first NF interacts with the third NF through service-oriented interfaces or point-to-point interfaces; and/or
the second NF interacts with the third NF through service-oriented interfaces or point-to-point interfaces.

Optionally, the signaling generating module 1002 is further configured to: request the third NF to generate the first UE signaling context, in which the first UE signaling context includes a second NF ID or a second NF address, and the signaling transmission indication sent to the second NF includes a third NF ID or a third NF address.

Optionally, the signaling generating module 1002 is further configured to: request the third NF to generate the first UE signaling context, in which the first UE signaling context includes one of a second NF ID and a second NF address and one of a fourth NF ID and a fourth NF address, the signaling transmission indication is further used to establish signaling interactions between the second NF and a fourth NF, and the fourth NF is a NF on the RAN CP that is independent of the second NF.

Optionally, the signaling generating module 1002 is further configured to: generate a second UE signaling context with a fifth NF according to the setup signaling transmission request, in which the fifth NF is a functional network element in a CN, and the second UE signaling context includes interaction signaling between an RAN and the CN.

Optionally, the first NF interacts with the fifth NF through service-oriented interfaces or point-to-point interfaces.

Optionally, the receiving module 1001 is further configured to: receive response information from the fifth NF in a case that the second UE signaling context is generated with the fifth NF.

Optionally, the receiving module 1001 is further configured to: receive response information from the UE through the third NF in a case that the first UE signaling context is generated with the third NF.

Optionally, the signaling generating module 1002 is further configured to: in response to receiving a UE signaling modifying/releasing/deleting request, modify, release or delete the first UE signaling context and the second UE signaling context.

Optionally, the receiving module 1001 is further configured to: receive response information from the fifth NF in a case that the second UE signaling context is modified, released or deleted.

It should be noted that the device provided by the embodiments of the disclosure can execute all the steps in the above method embodiments and achieve the same technical effects. The same parts and beneficial effects in the method embodiments will not be described in detail herein.

As illustrated in FIG. 11, the embodiments of the disclosure provide an RAN architecture-based communication device. The communication device is applied to a second NF of an RAN CP, and includes:
a receiving module 1101, configured to receive a signaling transmission indication sent by a first NF; and
a signaling interaction module 1102, configured to establish signaling interactions with a third NF indicated in the signaling transmission indication according to the signaling transmission indication;
in which the first NF is a NF on the RAN CP that is independent of the second NF.

The first NF is a NF on the RAN CP that is independent of the second NF.

Optionally, the first NF interacts with the second NF through service-oriented interfaces or point-to-point interfaces; and/or
the second NF interacts with the third NF through service-oriented interfaces or point-to-point interfaces.

Optionally, the signaling transmission indication includes a third NF ID or a third NF address. The signaling interaction module 1102 is further configured to: store and use the third NF ID or the third NF address, and establish the signaling interactions with the third NF.

Optionally, the signaling interaction module 1102 is further configured to: generate a data transmission bearer with the third NF in a case that the third NF ID or the third NF address is stored and used.

Optionally, the signaling transmission indication includes one of a third NF ID and a third NF address and one of a fourth NF ID and a fourth NF address. The signaling interaction module 1102 is further configured to: store and use one of the third NF ID and the third NF address and one of the fourth NF ID and the fourth NF address, and establish the signaling interactions with the third NF and signaling interactions with a fourth NF.

Optionally, the device further includes: a sending module. The sending module 1103 is further configured to: send the third NF ID or the third NF address to the fourth NF, in which the third NF ID or the third NF address sent to the fourth NF is used for generating a data transmission bearer between the fourth NF and the third NF.

Optionally, the second NF interacts with the fourth NF through service-oriented interfaces or point-to-point interfaces; and/or
the third NF interacts with the fourth NF through service-oriented interfaces or point-to-point interfaces.

It should be noted that the device provided by the embodiments of the disclosure can execute all the steps in the above method embodiments and achieve the same technical effects. The same parts and beneficial effects in the method embodiments will not be described in detail herein.

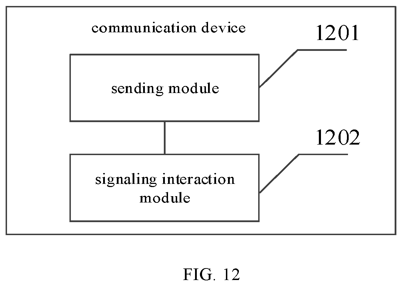

As illustrated in FIG. 12, the embodiments of the disclosure provide an RAN architecture-based communication device. The communication device is applied to a UE, and includes:
a sending module 1201, configured to send a setup signaling transmission request to a first NF on an RAN CP through a third NF, in which the setup signaling transmission request is used to instruct the first NF to generate a first UE signaling context with the third NF; and
a signaling interaction module 1202, configured to establish signaling interactions with a second NF through the third NF in a case that the first NF has generated the first UE signaling context with the third NF according to the setup signaling transmission request;
in which the first NF and the second NF are NFs on the RAN CP that are independent of each other.

Optionally, the signaling interaction module 1202 is further configured to: establish the signaling interactions with the second NF through the third NF according to a third NF ID or a third NF address, in which the third NF ID or the third NF address is sent to the second NF by the first NF for the second NF to store and use.

Optionally, the signaling interaction module 1202 is further configured to: generate a data transmission bearer with the second NF through the third NF in a case that the second NF has stored and used the third NF ID or the third NF address.

Optionally, the signaling interaction module 1202 is further configured to: generate a data transmission bearer with a fourth NF through the third NF in a case that the second NF has sent the third NF ID or the third NF address to the fourth NF, and the fourth NF has stored and used the third NF ID or the third NF address.

Optionally, the sending module 1201 is further configured to: send response information to the first NF in a case that the first UE signaling context is generated with the first NF.

It should be noted that the device provided by the embodiments of the disclosure can execute all the steps in the above method embodiments and achieve the same technical effects. The same parts and beneficial effects in the method embodiments will not be described in detail herein.

It should be noted that the division of units in the embodiments of the disclosure is exemplary. The division is only based on logic functions, and there are other division methods in practical applications. The functional units in the embodiments of the disclosure may be integrated into a single processing unit or may be physically separated, or two or more units may be integrated as one unit. The integrated unit described above may be implemented either in hardware or as a software functional unit.

The integrated unit may be stored in a processor-readable storage medium if it is implemented in the form of a software functional unit and sold or used as an independent product. Based on this understanding, the essence of the technical solution of the disclosure, a portion of the technical solution of the disclosure that contributes to related arts, or part or all of the technical solution of the disclosure may be embodied in the form of a software product. The computer software product is stored in a storage medium and includes several instructions to cause a computer device (e.g., a personal computer, a server or a network device) or a processor to implement all or part of the steps of the method in the embodiments of the disclosure.

It should be noted that the device provided by the embodiments of the disclosure can execute all the steps in the above method embodiments and achieve the same technical effects. The same parts and beneficial effects in the method embodiments will not be described in detail herein.

The embodiments of the disclosure further provide a processor-readable storage medium. The readable storage medium stores programs. When the programs are executed by a processor, it can execute each process of the above method embodiments, and achieve the same technical effects, which will not be repeated here to avoid repetition. The processor-readable storage medium may be any available medium or data storage device the processor can access, including but not limited to a magnetic memory (e.g., a floppy disk, a hard disk, a magnetic tape, and a magneto-optical (MO) disk), an optical memory (e.g., a compact disc (CD), a digital versatile disc (DVD), a Blu-ray disc (BD) and a high-definition versatile disc (HVD)), and a semiconductor memory (e.g., a read-only memory (ROM), an erasable programmable ROM (EPROM), an electrically EPROM (EEPROM), a NAND FLASH, and a solid-state drive (SSD)).

It should be noted that in the disclosure, terms "comprise", "contain" or any other variation thereof is intended to cover non-exclusive inclusion, such that a process, method, article or apparatus that comprises a series of elements includes not only those elements but also other elements not expressly listed, or elements inherent to such process, method, article or apparatus. Without further restrictions, for a process, method, article or apparatus "comprising one element", the presence of other identical elements in the process, method, article or apparatus that includes the element is not excluded.

Apparently, those skilled in the art may make various modifications and variations to the disclosure without departing from its spirit and scope. Thus, if these modifications and variations of the disclosure are within the scope of the claims of the disclosure and their equivalents, the disclosure is intended to include these modifications and variations.

## Claims

1. A radio access network (RAN) architecture-based communication method, applied to a first network function on an RAN control plane, comprising:
receiving a setup signaling transmission request from a user equipment (UE) through a third network function;
generating a first UE signaling context with the third network function according to the setup signaling transmission request; and
sending a signaling transmission indication to a second network function;
wherein the signaling transmission indication is used to establish signaling interactions between the second network function and the third network function, and the second network function is a network function on the RAN control plane that is independent of the first network function.

2. The method of claim 1, wherein the first network function interacts with the second network function through service-oriented interfaces or point-to-point interfaces; and/or
the first network function interacts with the third network function through service-oriented interfaces or point-to-point interfaces; and/or
the second network function interacts with the third network function through service-oriented interfaces or point-to-point interfaces.

3. The method of claim 1, wherein generating the first UE signaling context with the third network function according to the setup signaling transmission request, comprises:
requesting the third network function to generate the first UE signaling context, wherein the first UE signaling context comprises a second network function identifier or a second network function address;
wherein the signaling transmission indication sent to the second network function comprises a third network function identifier or a third network function address.

4. The method of claim 1, wherein generating the first UE signaling context with the third network function according to the setup signaling transmission request, comprises:
requesting the third network function to generate the first UE signaling context, wherein the first UE signaling context comprises one of a second network function identifier and a second network function address and one of a fourth network function identifier and a fourth network function address;
wherein the signaling transmission indication is further used to establish signaling interactions between the second network function and a fourth network function, and the fourth network function is a network function on the RAN control plane that is independent of the first network function and the second network function.

5. The method of claim 1, further comprising: generating a second UE signaling context with a fifth network function according to the setup signaling transmission request;
wherein the fifth network function is a functional network element in a core network, and the second UE signaling context comprises interaction signaling between an RAN and the core network.

6. The method of claim 5, wherein the first network function interacts with the fifth network function through service-oriented interfaces or point-to-point interfaces.

7. The method of claim 5, further comprising:
receiving response information from the fifth network function in a case that the second UE signaling context is generated with the fifth network function.

8. The method of claim 1, further comprising:
receiving response information from the UE through the third network function in a case that the first UE signaling context is generated with the third network function.

9. The method of claim 5, further comprising:
in response to receiving a UE signaling modifying/releasing/deleting request, modifying, releasing or deleting the first UE signaling context and the second UE signaling context.

10. The method of claim 9, further comprising:
receiving response information from the fifth network function in a case that the second UE signaling context is modified, released or deleted.

11. A radio access network (RAN) architecture-based communication method, applied to a second network function on an RAN control plane, comprising:
receiving a signaling transmission indication sent by a first network function; and
establishing signaling interactions with a third network function indicated in the signaling transmission indication according to the signaling transmission indication;
wherein the first network function is a network function on the RAN control plane that is independent of the second network function.

12. The method of claim 11, wherein the first network function interacts with the second network function through service-oriented interfaces or point-to-point interfaces; and/or
the second network function interacts with the third network function through service-oriented interfaces or point-to-point interfaces.

13. The method of claim 11, wherein the signaling transmission indication comprises a third network function identifier or a third network function address; and
establishing the signaling interactions with the third network function indicated in the signaling transmission indication, comprises:
storing and using the third network function identifier or the third network function address; and
establishing the signaling interactions with the third network function.

14. The method of claim 11, further comprising:
generating a data transmission bearer with the third network function in a case that the third network function identifier or the third network function address is stored and used.

15. The method of claim 11, wherein the signaling transmission indication comprises one of a third network function identifier and a third network function address and one of a fourth network function identifier and a fourth network function address; and
establishing the signaling interactions with the third network function indicated in the signaling transmission indication, comprises:
storing and using one of the third network function identifier and the third network function address and one of the fourth network function identifier and the fourth network function address; and
establishing the signaling interactions with the third network function and signaling interactions with a fourth network function.

16. The method of claim 15, further comprising:
sending the third network function identifier or the third network function address to the fourth network function;
wherein the third network function identifier or the third network function address sent to the fourth network function is used for generating a data transmission bearer between the fourth network function and the third network function.

17. The method of claim 15 or 16, wherein the second network function interacts with the fourth network function through service-oriented interfaces or point-to-point interfaces; and/or
the third network function interacts with the fourth network function through service-oriented interfaces or point-to-point interfaces.

18. A radio access network (RAN) architecture-based communication method, applied to a user equipment (UE), comprising:
sending a setup signaling transmission request to a first network function on an RAN control plane through a third network function, wherein the setup signaling transmission request is used to instruct the first network function to generate a first UE signaling context with the third network function;
establishing signaling interactions with a second network function through the third network function in a case that the first network function has generated the first UE signaling context with the third network function according to the setup signaling transmission request;
wherein the first network function and the second network function are network functions on the RAN control plane that are independent of each other.

19. The method of claim 18, wherein establishing the signaling interactions with the second network function through the third network function, comprises:
establishing the signaling interactions with the second network function through the third network function according to a third network function identifier or a third network function address;
wherein the third network function identifier or the third network function address is sent to the second network function by the first network function for the second network function to store and use.

20. The method of claim 19, further comprising:
generating a data transmission bearer with the second network function through the third network function in a case that the second network function has stored and used the third network function identifier or the third network function address.

21. The method of claim 19, further comprising:
generating a data transmission bearer with a fourth network function through the third network function in a case that the second network function has sent the third network function identifier or the third network function address to the fourth network function, and the fourth network function has stored and used the third network function identifier or the third network function address.

22. The method of claim 21, further comprising: sending response information to the first network function in a case that the first UE signaling context is generated with the first network function.

23. A radio access network (RAN) architecture-based communication apparatus, applied to a first network function of an RAN control plane at a base station side, comprising a memory, a transceiver and a processor;
wherein the memory is configured to store computer programs, the transceiver is configured to transmit and receive data under the control of the processor, and the processor is configured to read the computer programs in the memory and perform the following operations:
receiving a setup signaling transmission request from a user equipment (UE) through a third network function;
generating a first UE signaling context with the third network function according to the setup signaling transmission request; and
sending a signaling transmission indication to a second network function;
wherein the signaling transmission indication is used to establish signaling interactions between the second network function and the third network function, and the second network function is a network function on the RAN control plane that is independent of the first network function.

24. The communication apparatus of claim 23, wherein the first network function interacts with the second network function through service-oriented interfaces or point-to-point interfaces; and/or
the first network function interacts with the third network function through service-oriented interfaces or point-to-point interfaces; and/or
the second network function interacts with the third network function through service-oriented interfaces or point-to-point interfaces.

25. The communication apparatus of claim 23, wherein the processor is configured to:
request the third network function to generate the first UE signaling context, wherein the first UE signaling context comprises a second network function identifier or a second network function address;
wherein the signaling transmission indication sent to the second network function comprises a third network function identifier or a third network function address.

26. The communication apparatus of claim 23, wherein the processor is configured to:
request the third network function to generate the first UE signaling context, wherein the first UE signaling context comprises one of a second network function identifier and a second network function address and one of a fourth network function identifier and a fourth network function address;
wherein the signaling transmission indication is further used to establish signaling interactions between the second network function and a fourth network function.

27. The communication apparatus of claim 23, wherein the processor is further configured to:
generate a second UE signaling context with a fifth network function according to the setup signaling transmission request;
wherein the fifth network function is a functional network element in a core network, and the second UE signaling context comprises interaction signaling between an RAN and the core network.

28. The communication apparatus of claim 27, wherein the first network function interacts with the fifth network function through service-oriented interfaces or point-to-point interfaces.

29. The communication apparatus of claim 27, wherein the processor is further configured to: receive response information from the fifth network function in a case that the second UE signaling context is generated with the fifth network function.

30. The communication apparatus of claim 23, wherein the processor is further configured to:
receive response information from the UE through the third network function in a case that the first UE signaling context is generated with the third network function.

31. The communication apparatus of claim 27, wherein the processor is further configured to:
in response to receiving a UE signaling modifying/releasing/deleting request, modify, release or delete the first UE signaling context and the second UE signaling context.

32. The communication apparatus of claim 31, wherein the processor is further configured to:
receive response information from the fifth network function in a case that the second UE signaling context is modified, released or deleted.

33. A radio access network (RAN) architecture-based communication apparatus, applied to a second network function of an RAN control plane at a base station side, comprising a memory, a transceiver and a processor;
wherein the memory is configured to store computer programs, the transceiver is configured to transmit and receive data under the control of the processor, and the processor is configured to read the computer programs in the memory and perform the following operations:
receiving a signaling transmission indication sent by a first network function; and
establishing signaling interactions with a third network function indicated in the signaling transmission indication according to the signaling transmission indication;
wherein the first network function is a network function on the RAN control plane that is independent of the second network function.

34. The communication apparatus of claim 33, wherein the first network function interacts with the second network function through service-oriented interfaces or point-to-point interfaces; and/or
the second network function interacts with the third network function through service-oriented interfaces or point-to-point interfaces.

35. The communication apparatus of claim 33, wherein the signaling transmission indication comprises a third network function identifier or a third network function address; and
the processor is further configured to: store and use the third network function identifier or the third network function address; and
establish the signaling interactions with the third network function.

36. The communication apparatus of claim 33, wherein the processor is further configured to:
generate a data transmission bearer with the third network function in a case that the third network function identifier or the third network function address is stored and used.

37. The communication apparatus of claim 33, wherein the signaling transmission indication comprises one of a third network function identifier and a third network function address and one of a fourth network function identifier and a fourth network function address; and
the processor is further configured to:
store and use one of the third network function identifier and the third network function address and one of the fourth network function identifier and the fourth network function address; and
establish the signaling interactions with the third network function and signaling interactions with a fourth network function.

38. The communication apparatus of claim 37, wherein the processor is further configured to: send the third network function identifier or the third network function address to the fourth network function;
wherein the third network function identifier or the third network function address sent to the fourth network function is used for generating a data transmission bearer between the fourth network function and the third network function.

39. The communication apparatus of claim 37 or 38, wherein the second network function interacts with the fourth network function through service-oriented interfaces or point-to-point interfaces; and/or
the third network function interacts with the fourth network function through service-oriented interfaces or point-to-point interfaces.

40. A radio access network (RAN) architecture-based communication apparatus, applied to a user equipment (UE), comprising a memory, a transceiver and a processor;
wherein the memory is configured to store computer programs, the transceiver is configured to transmit and receive data under the control of the processor, and the processor is configured to read the computer programs in the memory and perform the following operations:
sending a setup signaling transmission request to a first network function on an RAN control plane through a third network function, wherein the setup signaling transmission request is used to instruct the first network function to generate a first UE signaling context with the third network function;
establishing signaling interactions with a second network function through the third network function in a case that the first network function has generated the first UE signaling context with the third network function according to the setup signaling transmission request;
wherein the first network function and the second network function are network functions on the RAN control plane that are independent of each other.

41. The communication apparatus of claim 40, wherein the processor is further configured to:
establish the signaling interactions with the second network function through the third network function according to a third network function identifier or a third network function address;
wherein the third network function identifier or the third network function address is sent to the second network function by the first network function for the second network function to store and use.

42. The communication apparatus of claim 41, wherein the processor is further configured to:
generate a data transmission bearer with the second network function through the third network function in a case that the second network function has stored and used the third network function identifier or the third network function address.

43. The communication apparatus of claim 41, wherein the processor is further configured to:
generate a data transmission bearer with a fourth network function through the third network function in a case that the second network function has sent the third network function identifier or the third network function address to the fourth network function, and the fourth network function has stored and used the third network function identifier or the third network function address.

44. The communication apparatus of claim 43, wherein the processor is further configured to: send response information to the first network function in a case that the first UE signaling context is generated with the first network function.

45. A radio access network (RAN) architecture-based communication device, applied to a first network function on an RAN control plane, comprising:
a receiving module, configured to receive a setup signaling transmission request from a user equipment (UE) through a third network function;
a signaling generating module, configured to generate a first UE signaling context with the third network function according to the setup signaling transmission request; and
a sending module, configured to send a signaling transmission indication to a second network function;
wherein the signaling transmission indication is used to establish signaling interactions between the second network function and the third network function, and the second network function is a network function on the RAN control plane that is independent of the first network function.

46. A radio access network (RAN) architecture-based communication device, applied to a second network function on an RAN control plane, comprising:
a receiving module, configured to receive a signaling transmission indication sent by a first network function; and
a signaling interaction module, configured to establish signaling interactions with a third network function indicated in the signaling transmission indication according to the signaling transmission indication;
wherein the first network function is a network function on the RAN control plane that is independent of the second network function.

47. A radio access network (RAN) architecture-based communication device, applied to a user equipment (UE), comprising:
a sending module, configured to send a setup signaling transmission request to a first network function on an RAN control plane through a third network function, wherein the setup signaling transmission request is used to instruct the first network function to generate a first UE signaling context with the third network function; and
a signaling interaction module, configured to establish signaling interactions with a second network function through the third network function in a case that the first network function has generated the first UE signaling context with the third network function according to the setup signaling transmission request;
wherein the first network function and the second network function are network functions on the RAN control plane that are independent of each other.

48. A processor-readable storage medium, wherein the processor-readable storage medium stores programs that are used to cause a processor to implement the method of any one of claims 1-22.
